# EUROPEAN PATENT SPECIFICATION

(11) **EP 1 131 370 B1**
(45) Date of publication and mention of the grant of the patent: **22.02.2006**
(21) Application number: 98950794.2
(22) Date of filing: 01.10.1998
(51) Int. Cl.: C08G 59/10, C08G 59/50

(54) **HYDROXY-FUNCTIONALIZED POLY(AMINO ETHER) SALTS**
HYDROXYFUNKTIONELLE POLYAMINOETHERSALZE
SELS DE POLY(AMINO ETHER) FONCTIONNALISES HYDROXY

(43) Date of publication of application: 12.09.2001
(73) Proprietor: DOW GLOBAL TECHNOLOGIES INC., Midland, Michigan 48674 (US)
(72) Inventor: CAVITT, Michael, B., Lake Jackson, TX 77566 (US); BECKERDITE, John, M., Lake Jackson, TX 77566 (US); WHITE, Jerry, E., Lake Jackson, TX 77566 (US); SILVIS, H., Craig, Midland, MI 48642 (US)
(74) Representative: Raynor, John
(86) International application number: PCT/US1998/020523
(87) International publication number: WO 2000/020484

(56) References cited:
- EP-A- 0 274 355
- EP-A- 0 479 445
- US-A- 4 001 156
- US-A- 4 069 210
- US-A- 5 686 551
- US-A- 5 814 373
- US-A- 5 834 078

## Description

This invention relates to polyethers having pendant hydroxyl moieties and to methods of using them as barrier articles to protect oxygen-sensitive materials. More particularly, this invention relates to salts of hydroxy-functionalized polyetheramines.

Hydroxy-functionalized polyetheramines are known and are described, for example, in U.S. Patents 5,275,853 and 5,464,924. These polyetheramines exhibit oxygen transmission rates of from 0.037 cm-mil/m²-atm (O₂) day (0.57 to 19 cm³-mil/100 in²-atm (O₂)-day), and are useful in the fabrication of barrier containers and films and as molding, extrusion and casting resins.

Published European Application EP0274355A2 discloses tetracyanoquinone dimethane (TCNQ) salts of quaternary linear addition polymers derived from diglycidyl compounds and primary monoamines. In these quaternary ammonium salts the nitrogen atoms in the polyether chain do not carry a hydrogen atom.

It would be desirable to provide new hydroxy-functionalized polyetheramines having oxygen transmission rates that are less than 0.032 cm-mil/m²-atm (O₂) day (0.5 cm³⁻mil/100 in²-atm(O₂)-day).

In a first aspect, the present invention is a salt of a hydroxy-functionalized polyetheramine wherein at least one of the backbone nitrogen atoms is tetracoordinate and positively charged and the total positive charge is balanced with negatively charged counter ions.

In a second aspect, the present invention is a process which comprises contacting a hydroxy-functionalized polyetheramine with a protonic acid an amount and under reaction conditions sufficient to form a hydroxy-functionalized polyetheramine salt having an oxygen transmission rate of less than about 0.5 cm³-mil/100 in²-atm(O₂)-day.

### Detailed Description of the Invention

The hydroxy-functionalized polyetheramine salt of the present invention has repeating units represented by any one of the following formulas: 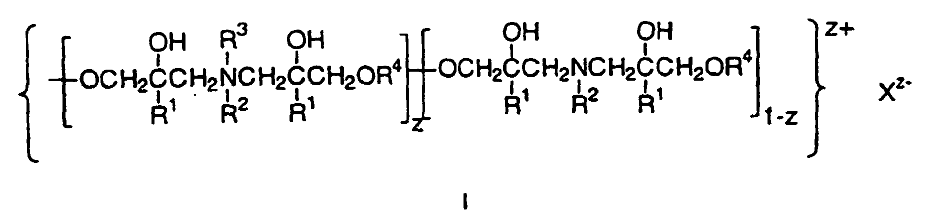 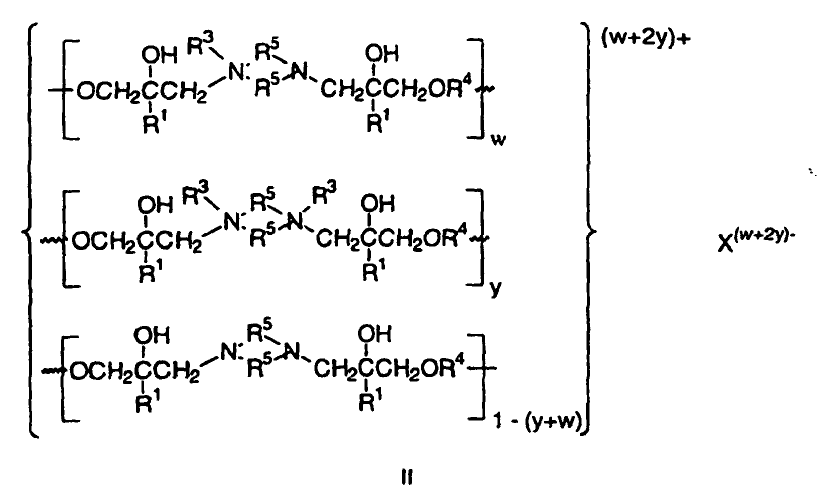 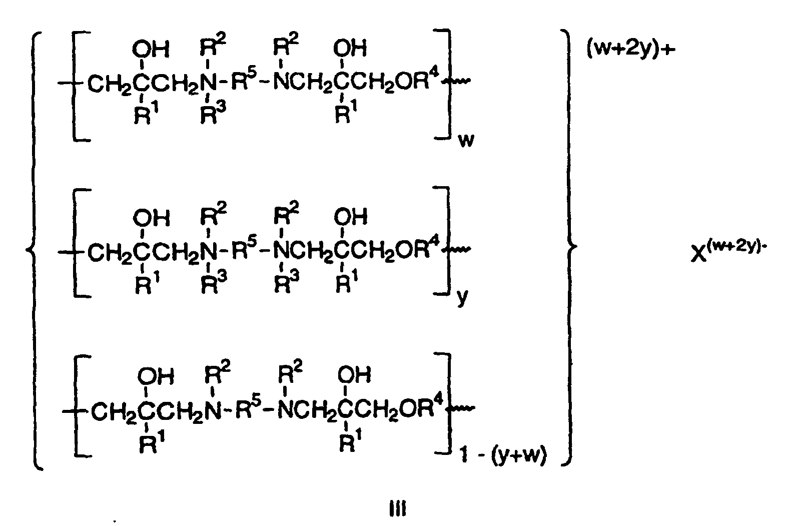
wherein R¹ is a hydrocarbyl group or hydrogen; R² is a hydrocarbyl or substituted hydrocarbyl group; R³ is hydrogen ; R⁴ and R⁵ are independently hydrocarbylene moieties; z is a number from 0.01 to 1; w is a number from 0 to about 1 and y is a number from 0 to 1 such that (w+y) equals 0.01 to 1; n is a number from 5 to 1000; and X is a negatively charged counterion or combination of such ions present in sufficient amount to balance the total positive charge of the tetracoordinate nitrogen atoms.

Representative divalent organic moieties useful as R⁴ and R⁵ include alkylene, cycloalkylene, alkylenearylene, poly(alkyleneoxyalkylene), alkylenethioalkylene, alkylenesulfonylalkylene, alkylene substituted with at least one hydroxyl group, cycloalkylene substituted with at least one hydroxyl group, alkylenearylene substituted with at least one hydroxyl group, poly(alkyleneoxyalkylene) substituted with at least one hydroxyl group, alkylenethioalkylene substituted with at least one hydroxyl group, alkylenesulfonylalkylene substituted with at least one hydroxyl group; arylene, dialkylenearylene, diaryleneketone, diarylenesulfone, diarylene oxide and diarylene sulfide.

In the more preferred hydroxy-functionalized polyetheramine salts, R¹ is hydrogen, methyl, ethyl, propyl, butyl, pentyl, hexyl, cyclohexyl, benzyl, phenyl; R² is methyl, ethyl, propyl, butyl, pentyl, hexyl, cyclohexyl, benzyl, phenyl, 2-hydroxyethyl, 2-hydroxypropyl, 3-hydroxypropyl, 2-acetamidoethyl or a combination of these moieties; R³ is hydrogen ; and R⁴ and R⁵ are independently methylene, ethylene, propylene, butylene, pentamethylene, hexamethylene, heptamethylene, octamethylene, nonamethylene, decamethylone, dodecamethylene, 1,4-cyclohexylene, 1,3-cyclohexylene or 1,2-cyclohexylene optionally substituted with at least one hydroxyl group, p-phenylene, m-phenylene, or 2,6-naphthalene, diphenylene-isopropylidene, sulfonyldiphenylene, carbonyldiphenylene, oxydiphenylene, or 9,9-fluorenediphenylene.

In general, the hydroxy-functionalized polyetheramine salts of the present invention can be prepared by: 1) dissolving a hydroxy-functionalized polyetheramine in a suitable solvent and then adding a protonic acid, neat or in a suitable solvent, at a temperature, pressure and time sufficient to yield the desired reaction, and then isolating the resulting salt using methods familiar to those skilled in the art, (2) placing a hydroxy-functionalized polyetheramine in water containing a protonic acid and letting the acid be absorbed into the solid poly(hydroxyaminoether) polymer over a period of time sufficient to allow the absorption to take place, or (3) allowing a molten hydroxy-functionalized polyetheramine to come into contact with a protonic acid.

Preferably, the hydroxy-functionalized polyetheramines which can be employed in the practice of the present invention for preparing the hydroxy-functionalized polyetheramine salts contain either one or a combination of the following repeating units: 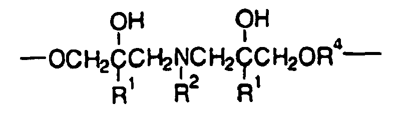 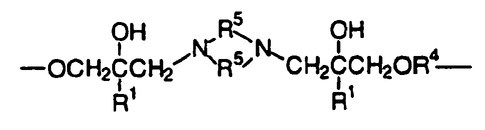 or 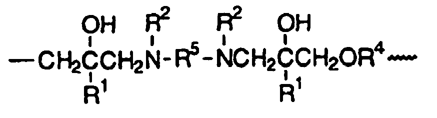
wherein R¹, R², R⁴ and R⁵ are as previously defined.

Preferred hydroxy-functionalized polyetheramines are prepared by contacting one or more of the diglycidyl ethers of a dihydric phenol with an amine having two amine hydrogens under conditions sufficient to cause the amine moieties to react with epoxy moieties to form a polymer backbone having amine linkages, ether linkages and pendant hydroxyl moieties. These polyetheramines are described in U.S.Patent 5,275,853.

Protonic acids which can be employed in the practice of the present invention for preparing the hydroxy-functionalized polyetheramine salts include hydrobromic acid, hydrochloric acid, hydrofluoric acid, hydroiodic acid, nitric acid, phosphoric acid, sulfuric acid, phosphorus acid, p-toluenesulfonic acid, trichloroacetic acid, dichloroacetic acid, chloroacetic acid, acetic acid, benzoic acid, stearic acid, 1,4-butanedicarboxylic acid, citric acid, benzenesulfonic acid, and dinitrobenzoic acid. Preferred protonic acids are hydrochloric acid, nitric acid, *p*-toluenesulfonic acid; more preferred are hydrochloric acid and p-toluenesulfonic acid; and most preferred is hydrochloric acid.

While the amount of protonic acids used depends on a variety of factors, including the specific hydroxy-functionalized polyetheramine employed and the desired end-uses of the hydroxy-functionalized polyetheramine salts, in general, the protonic acids can be present in an amount of 1 acid group for every 1 to 30 nitrogen atoms , preferably 1 acid group for every 1 to 10 nitrogen atoms and, most preferably, 1 acid group for every 1 to 3 nitrogen atoms.

The conditions at which the reaction is most advantageously conducted are dependent on a variety of factors, including the specific reactants, solvent, and catalyst employed, if any. In general, the reaction is conducted under a non-oxidizing atmosphere such as a blanket of nitrogen or other inert gases, preferably at a temperature of from 25°C to 110°C, more preferably at a temperature of from 25 to 100°C and most preferably at a temperature of from 25 to 95°C. The reaction can be conducted neat (without solvent or other diluents) in molten hydroxy-functionalized polyetheramines in, for example, an extruder, where temperatures have to be appreciably higher. However, it is often desirable to use inert organic solvents. Examples of suitable solvents include N-methylpyrrolidinone (NMP), methyl benzoate, ethyl benzoate, butyl benzoate; cyclopentanone, cyclohexanone, cycloheptanone, cyclooctanone, cyclohexylpyrrolidinone; and ethers or hydroxy ethers such as diglyme, triglyme, diethylene glycol ethyl ether, diethylene glycol methyl ether, dipropylene glycol methyl ether, dipropylene glycol dimethyl ether, propylene glycol phenyl ether, propylene glycol methyl ether and tripropylene glycol methyl ether; toluene, mesitylene, xylene, benzene, dipropylene glycol monomethyl ether acetate, halogenated solvents such as dichlorobenzene, propylene carbonate, diphenyl ether, butyrolactone, dimethylacetamide, dimethylformamide and mixtures thereof. The preferred solvents are propylene glycol methyl ether, available as DOWANOL PM from The Dow Chemical Company, dimethyl formamide, and mixtures thereof.

The polymers are recovered from the reaction mixture by conventional methods. For example, the reaction mixture containing the polymer as a precipitate can be filtered to remove the solid polymer. The solid polymer can then be rinsed with water, methanol, and ether or other solvents which are non-solvents for the monomer, but good solvents for the impurities.

Films prepared from the hydroxy-functionalized polyetheramine salts of the present invention generally have oxygen transmission rates (OTR) of less than 0.032 cm-mil/m²-atm (O₂) day (0.5 cm³-mil/100 in²-atm(O₂)-day).

The hydroxy-functionalized polyetheramine salts of the present invention are suitable for use in fabricating molded, extruded or foamed articles, containers, films, film laminates, and water absorbing articles, using conventional fabricating techniques such as extrusion, compression molding, injection molding, blow molding and similar fabrication techniques commonly used to produce such articles. Examples of such articles include films, foams, sheets, pipes, rods, bags and boxes. In preparing such articles, additives such as fillers, pigments, carbon black, conductive metal particles, abrasives and lubricating polymers may be employed. The method of incorporating the additives is not critical and they can conveniently be added to the polymer prior to preparing the article. If the polymer is prepared in solid form, the additives can be added to the melt prior to processing into a shaped article.

The hydroxy-functionalized polyetheramine salts of the present invention can be applied in liquid form to various substrates by a number of methods such as dip-coating, roll-coating, brushing (for example as a varnish), spray-coating, dispersion-spraying, solution-casting, and slurry-spraying; or in solid form by powder coating, dry-powder-spraying, fluidized bed techniques and extruding molten polymer.

When applying the hydroxy-functionalized polyetheramine salts of the present invention in liquid form, specific conditions of polymerization and other processing parameters most advantageously employed are dependent on a variety of factors, particularly the specific hydroxy-functionalized polyetheramine salts being deposited, the conditions of coating, the coating quality and thickness, and the end-use application.

Substrate(s) which can be coated with the hydroxy-functionalized polyetheramine salts of the present invention can be any material which has sufficient integrity to be coated with the polymer. Representative examples of suitable substrates include wood, metal, ceramics, glass, other polymers, paper, paper board cloth, woven fibers, non-woven fiber mats, synthetic fibers, Kevlar™, and carbon fibers. The substrates which are employed are selected based on the desired application.

The substrate may be of any shape, and the shape is dependent on the end-use application. For instance, the substrate may be in the form of a wire, tube, board, sphere, rod, pipe, cylinder, brick, fiber, woven or non-woven fabric, yarn (including commingled yarns), ordered polymers, and woven or non-woven mat. In each case the substrate may be hollow or solid. In the case of hollow objects, the polymer layer(s) is on either or both the inside or outside of the substrate. The substrate may comprise a porous layer, such as graphite mat or fabric, glass mat or fabric, a scrim, and particulate material.

The following working examples are given to illustrate the invention and should not be construed as limiting its scope. Unless otherwise indicated, all parts and percentages are by weight.

### Example 1

To a 150 mL reaction flask equipped with an overhead stirrer, nitrogen pad, condenser and temperature controller was added hydroxy-functionalized polyetheramine (Polymer A, having structure A) (24 g) and DOWANOL PM (40 mL). The mixture was heated to 110°C and stirred until dissolved. The solution was allowed to cool to 30°C. To the solution was added conc. HCl (1 g) and the mixture was stirred for 30 minutes, diluted with dimethylformamide (10 g) and heated to 90°C. The reaction mixture was cooled to 60°C. The polymer was isolated by slowly pouring the reaction mixture into a high speed blender containing an ice mixture (1500 mL of crushed ice and 900 mL of water). The polymer was collected by filtration and dried overnight *in vacuo* at 50°C. It had the following structural formula:

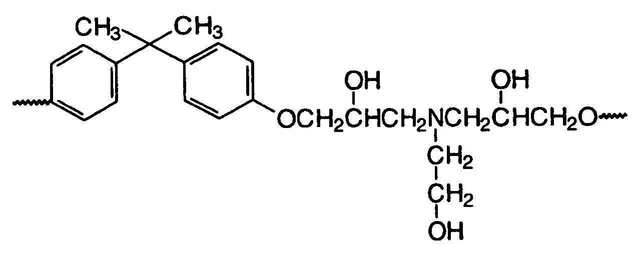

The polymer has the following properties:

| | |
|---|---|
| Percent Cl: | 1.8^{a} |
| Weight average molecular weight (Mw): | 104839^{b} |
| Number average molecular weight (Mn): | 63329^{b} |
| z average molecular weight (Mz): | 144243^{b} |
| Glass transition temperature (Tg): | 78°C |

| | |
|---|---|
| ^{a}Determined by ASTM E442-91 | |
| ^{b}Determined by Gel Permeation Chromatography | |
| ^{c}Determined by using a DuPont Model 2100 differential scanning colorimeter (DSC) operation in a heating mode at 20°C/minute | |

### Example 2

To a 150 mL reaction flask equipped with an overhead stirrer, nitrogen pad, condenser and temperature controller was added Polymer A (24 g) and DOWANOL™ PM (40 mL). The reaction mixture was heated to 110°C, stirred until it was dissolved and allowed to cool to 30°C. Concentrated HCl (2 g) was then added and the mixture stirred for 30 minutes, diluted with dimethylformamide (10 g) and heated to 90°C. The reaction product was cooled to 60°C. The hydroxy-functionalized polyetheramine salt was isolated by slowly pouring the reaction mixture into a high speed blender containing an ice mixture (1500 mL of crushed ice and 900 mL of water). The salt was collected by filtration and dried overnight *in vacuo* at 50°C. It had the following properties (determined as in Example 1):

| | |
|---|---|
| Percent Cl: | 2.8 |
| Weight average molecular weight (Mw): | 105722 |
| Number average molecular weight (Mn): | 64638 |
| z average molecular weight (Mz): | 144643 |
| Glass transition temperature (Tg): | 80°C. |

### Example 3

To a 150 mL reaction flask equipped with an overhead stirrer, nitrogen pad, condenser and temperature controller was added Polymer A (20 g) and DOWANOL™ PM (50 g). The mixture was heated to 90°C, stirred until it was dissolved and then cooled to 30°C. Concentrated HCl (1.8 g) was added and the reaction mixture was diluted with dimethylformamide (50 g) and then heated to 85°C and maintained at that temperature for 2 hours. The reaction product was cooled and collected. The polymer mixture was dried in a vacuum oven at 120°C overnight.

It had the following properties (determined as in Example 1):

| | |
|---|---|
| Percent Cl: | 4.0 |
| Weight average molecular weight (Mw): | 105895 |
| Number average molecular weight (Mn): | 59971 |
| z average molecular weight (Mz): | 145089 |
| Glass transition temperature (Tg): | 75°C. |

The solid hydroxy-functionalized polyetheramine salt was compression molded into 10.16 mm by 10.16 mm by 0.0254 mm (4 inch by 4 in by 0.010 inch) films for oxygen permeability testing. The films have an OTR of 0.017 cm-mil/m²-atm (O₂) day (0.27 cm³-mil/100 in²-atm (O₂)-day) at 51.5 percent RH

A film of hydroxy-functionalized polyetheramine which had not been treated with a protonic acid or an alkyl halide was molded under conditions identical to those used above. The film was tested for oxygen permeability and found to have an OTR of 0.054 cm-mil/m²-atm (O₂) day (1.0 cm³-mil/100 in²-atm (O₂)-day at 60 percent RH.

The oxygen transmission rates in this example and in the following examples were determined by ASTM method D-3985-81.

### Example 4

To a 150 mL reaction flask equipped with an overhead stirrer, nitrogen pad, condenser and temperature controller was added Polymer A (24 g) and DOWANOL™ PM (40 mL). The mixture was heated to 110°C, stirred until it was dissolved and allowed to cool to 30°C. Concentrated HCl (4 g) was added and the mixture was stirred for 30 minutes, diluted with dimethylformamide (25 g), heated to 90°C and then cooled to 60°C. The polymer was isolated by slowly pouring the reaction mixture into a high speed blender containing an ice mixture (1500 mL of crushed ice and 900 mL of water). The hydroxy-functionalized polyetheramine salt (62.1 g) was collected by filtration and dried overnight *in vacuo* at 50°C. The dried polymer weighed 11.8 grams (426 percent water absorbed). It had the following properties (determined as in Example 1):

| | |
|---|---|
| Percent Cl: | 5.2 |
| Weight average molecular weight (Mw): | 109171 |
| Number average molecular weight (Mn): | 68442 |
| z average molecular weight (Mz): | 146597 |
| Glass transition temperature (Tg): | 81°C. |

### Example 5

To a 150 mL reaction flask equipped with an overhead stirrer, nitrogen pad, condenser and temperature controller was added Polymer A (24 g) and DOWANOL™ PM (40 mL). The mixture was heated to 110°C, stirred until it was dissolved and allowed to cool to 30°C. Concentrated HCl (6 g) was added and the mixture was stirred for 30 minutes, diluted with dimethylformamide (35 g), heated to 90°C and then cooled to 60°C. The polymer was isolated by slowly pouring the reaction mixture into a high speed blender containing an ice mixture (1500 mL of crushed ice and 900 mL of water). The polymer (120 g) was collected by filtration, dried overnight *in vacuo* at 50°C. The dried polymer weighed 5.8 grams (1969 percent water absorbed). It had the following properties (determined as in Example 1):

| | |
|---|---|
| Percent Cl: | 8.6 |
| Weight average molecular weight (Mw): | 111897 |
| Number average molecular weight (Mn): | 75827 |
| z average molecular weight (Mz): | 148522 |
| Glass transition temperature (Tg): | 79°C. |

### Example 6

To a 150 mL reaction flask equipped with an overhead stirrer, nitrogen pad, condenser and temperature controller was added Polymer A (20 g) and DOWANOL™ PM (50 g). The mixture was heated to 90°C, stirred until it was dissolved and then cooled to 30°C. A 70 percent solution of HNO₃ (1.6 g) was added after adding 1.6 g of water. The reaction mixture was diluted with dimethylformamide (6 g) and then stirred for 30 minutes. The polymer product was cooled and collected by filtration. The polymer was dried in a vacuum oven at 120°C overnight. The solid hydroxy-functionalized polyetheramine salt was compression molded into 10.16 mm by 10.16 mm by 0.0254 mm (4 inch by 4 inch by 0.010 inch) films for oxygen permeability testing. The films had an OTR of 0.022 cm-mil/m²-atm (O₂) day (0.34 cm³-mil/100 in²-atm (O₂)-day) at 51.5 percent RH.

## Claims

1. A hydroxy-functionalized polyetheramine salt represented by Formulas I, II or III: 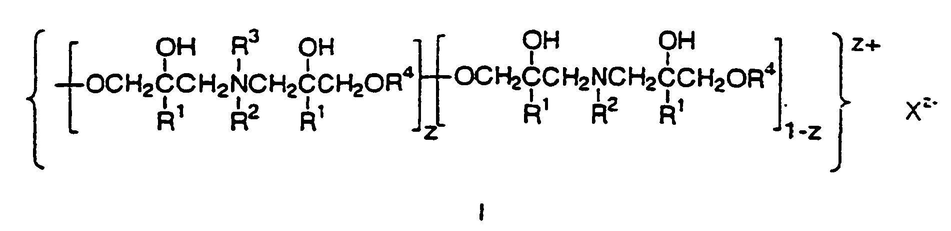 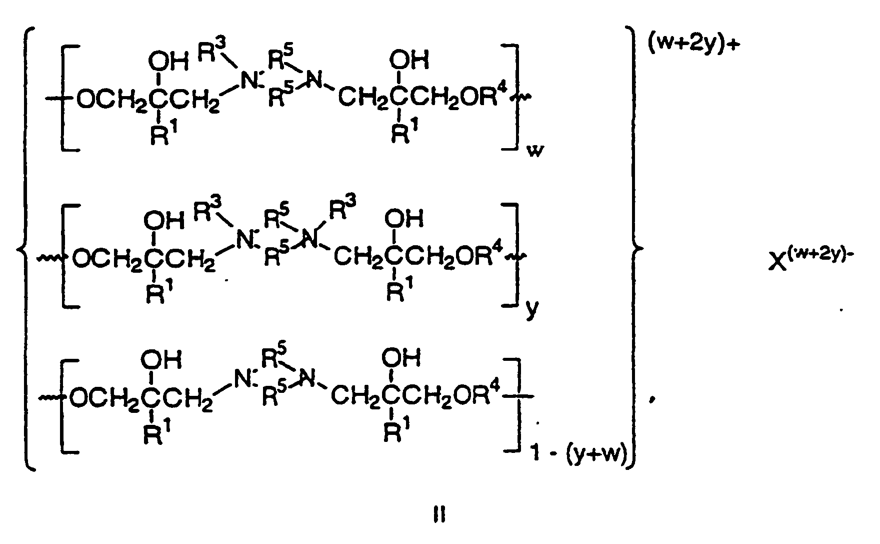 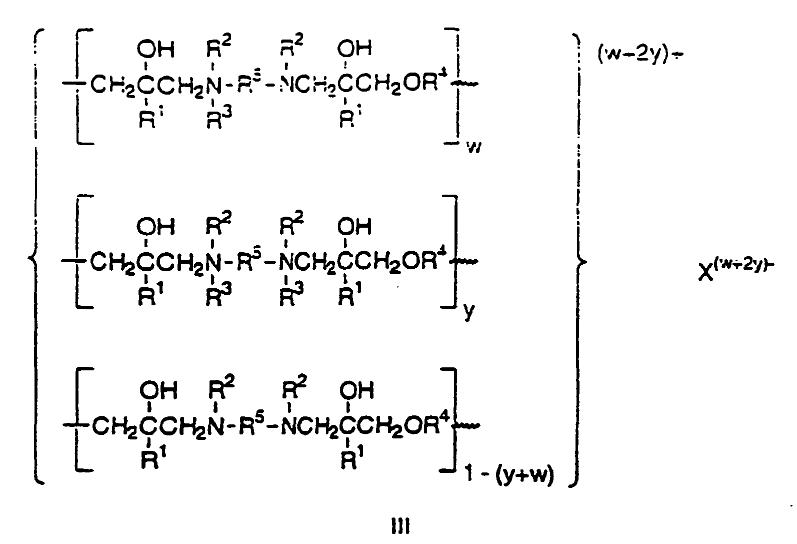
wherein R¹ is a hydrocarbyl group or hydrogen; R² is a hydrocarbyl or substituted hydrocarbyl group; R³ is hydrogen; R⁴ and R⁵ are independently hydrocarbylene moieties; z is a number from 0.01 to 1.0; w is a number from 0 to 1.0 and y is a number from 0 to 1.0 such that (w+y) equals about 0.01 to 1.0; n is an number from 5 to 1000 and X is a negatively charged counter ion or combination of such ions present in sufficient amount to balance the total positive charge of the tetracoordinate nitrogen atoms.

2. The hydroxy-functionalized polyetheramine salt of Claim 1 wherein R¹ is alkyl or hydrogen.

3. The hydroxy-functionalized polyetheramine salt of Claim 1 or 2 wherein R² is methyl, ethyl, propyl, butyl, pentyl, hexyl, cyclohexyl, benzyl, phenyl, 2-hydroxyethyl, 2-hydroxypropyl, 3-hydroxypropyl, 2-acetamidoethyl or a combination of these moieties.

4. The hydroxy-functionalized polyetheramine salt of Claim 1, 2 or 3 wherein R⁴ is ethylene, propylene, butylene, ethyleneoxyethylene, propyleneoxypropylene, 1,3-phenylene, 1,4-phenylene, isopropylidenediphenylene, oxydiphenylene, thiodiophenylene, carbonyldiphenylene, methylenediphenylene or a combination of these moieties.

5. The hydroxy-functionalized polyetheramine salt of any preceding claim wherein R⁵ is ethylene or 1,2-propylene.

6. The hydroxy-functionalized polyetheramine salt of any preceding claim wherein X is a halide, nitrate, sulfate, phosphate or phosphonate.

7. The hydroxy-functionalized polyetheramine salt of any one of Claims 1 to 5 wherein X is a carboxylate, multi-functional carboxylate, sulfonate or multifunctional sulfonate.

8. The hydroxy-functionalized polyetheramine salt of Claim 7 wherein X is acetate, benzoate, stearate, 1,4-butanedicarboxylate, citrate, benzenesulfonate, or p-toluenesulfonate.

9. The hydroxy-functionalized polyetheramine salt of any preceding claim formed by reacting a protonic acid with a hydroxy-functionalized polyetheramine containing either one or a combination of the repeating units: 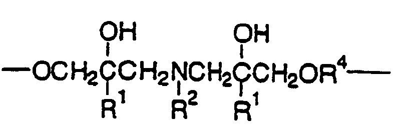 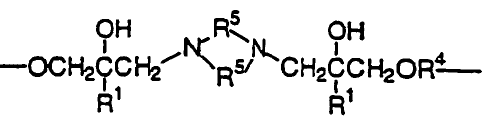 or 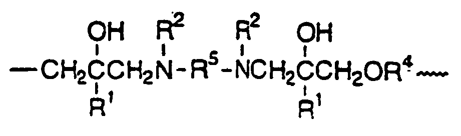 wherein R¹, R², R⁴ and R⁵ are as previously defined.

10. A process which comprises contacting a hydroxy-functionalized polyetheramine with a protonic acid at a temperature of from 25°C to 110°C to form the hydroxy-functionalized polyetheramine salt of any one of Claims 1 to 9.

11. The process of Claim 10 wherein the hydroxy-functionalized polyetheramine is molten.

12. The process of Claim 10 wherein the hydroxy-functionalized polyetheramine is dissolved in a solvent.

13. The process of Claim 10 wherein the hydroxy-functionalized polyetheramine is suspended in an aqueous protonic acid.

14. The hydroxy-functionalized polyetheramine salt of any one of Claims 1 to 9 in the form of a film, coating, laminate, adhesive, foam, molded article, extruded article, flexible container or rigid container, or packaging material.

15. The hydroxy-functionalized polyetheramine salt of any one of Claims 1 to 9 in the form of a water absorbing article.

## Patentansprüche

1. Hydroxyfunktionalisiertes Polyetheraminsalz, das repräsentiert wird durch die Formeln I, II oder III: 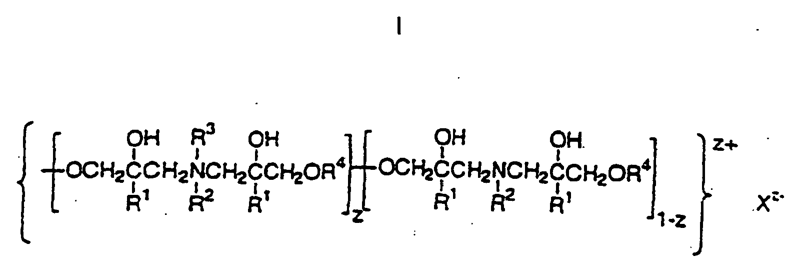 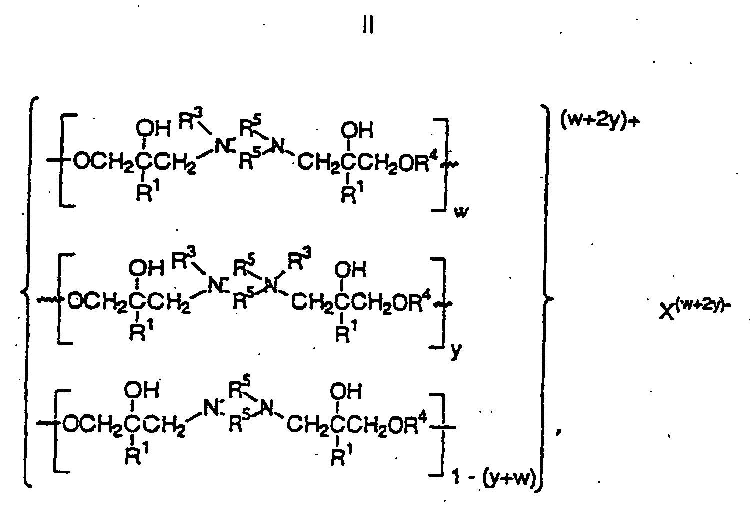 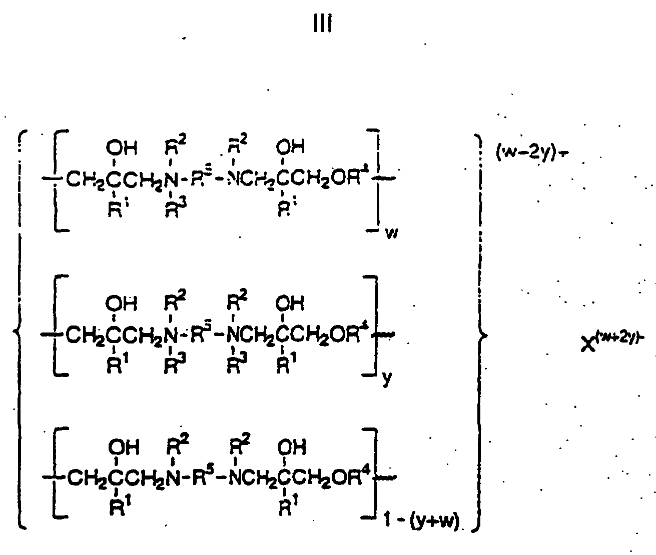
wobei R¹ eine Hydrocarbylgruppe oder Wasserstoff ist; R² eine Hydrocarbylgruppe oder substituierte Hydrocarbylgruppe ist; R³ Wasserstoff ist; R⁴ und R⁵ unabhängig voneinander Hydrocarbylenkomponenten sind; z eine Zahl von 0,01 bis 1,0 ist; w eine Zahl von 0 bis 1,0 ist und y eine Zahl von 0 bis 1,0 ist, so dass (w+y) gleich etwa 0,01 bis 1,0; n eine Zahl von 5 bis 1000 ist und X ein negativ geladenes Gegenion oder eine Kombination solcher Ionen ist, die in ausreichender Menge vorhanden sind, um die gesamte positive Ladung der vierfach koordinierten Stickstoffatome auszugleichen.

2. Hydroxyfunktionalisiertes Polyetheraminsalz nach Anspruch 1, bei dem R¹ Alkyl oder Wasserstoff ist.

3. Hydroxyfunktionalisiertes Polyetheraminsalz nach Anspruch 1 oder 2, bei dem R² Methyl, Ethyl, Propyl, Butyl, Pentyl, Hexyl, Cyclohexyl, Benzyl, Phenyl, 2-Hydroxyethyl, 2-Hydroxypropyl, 3-Hydroxypropyl, 2-Acetamidoethyl oder eine Kombination dieser Komponenten ist.

4. Hydroxyfunktionalisiertes Polyetheraminsalz nach Anspruch 1, 2 oder 3, bei dem R⁴ Ethylen, Propylen, Butylen, Ethylenoxyethylen, Propylenoxypropylen, 1,3-Phenylen, 1,4-Phenylen, Isopropylidendiphenylen, Oxydiphenylen, Thiodiphenylen, Carbonyldiphenylen, Methylendiphenylen oder eine Kombination dieser Komponenten ist.

5. Hydroxfunktionalisiertes Polyetheraminsalz nach einem der vorhergehenden Ansprüche, bei dem R⁵ Ethylen oder 1,2-Propylen ist.

6. Hydroxyfunktionalisiertes Polyetheraminsalz nach einem der vorhergehenden Ansprüche, bei dem X ein Halogenid, Nitrat, Sulfat, Phosphat oder Phosphonat ist.

7. Hydroxyfunktionalisiertes Polyetheraminsalz nach einem der Ansprüche 1 bis 5, bei dem X ein Carboxylat, polyfunktionelles Carboxylat, Sulfonat oder polyfunktionelles Sulfonat ist.

8. Hydroxyfunktionalisiertes Polyetheraminsalz nach Anspruch 7, bei dem X Acetat, Benzoat, Stearat, 1,4-Butandicarboxylat, Citrat, Benzolsulfonat oder p-Toluolsulfonat ist.

9. Hydroxyfunktionalisiertes Polyetheraminsalz nach einem der vorhergehenden Ansprüche, das gebildet wird durch Umsetzen einer Brönsted-Säure mit einem hydroxyfunktionalisierten Polyetheramin, das entweder eine sich wiederholende Einheit oder eine Kombination von sich wiederholenden Einheiten enthält: 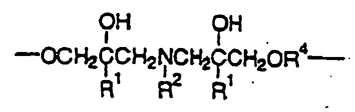 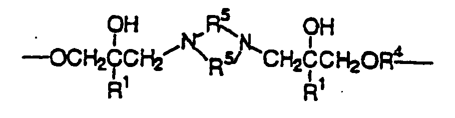 oder 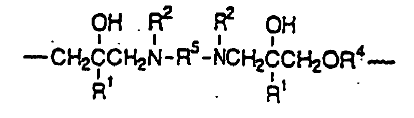
wobei R¹, R², R⁴ und R⁵ der obigen Definition entsprechen.

10. Verfahren, bei dem ein hydroxyfunktionalisiertes Polyetheramin bei einer Temperatur von 25°C bis 110°C mit einer Brönsted-Säure in Kontakt gebracht wird, um das hydroxyfunktionalisierte Polyetheraminsalz nach einem der Ansprüche 1 bis 9 zu bilden.

11. Verfahren nach Anspruch 10, bei dem das hydroxyfunktionalisierte Polyetheramin geschmolzen wird.

12. Verfahren nach Anspruch 10, bei dem das hydroxyfunktionalisierte Polyetheramin in einem Lösungsmittel gelöst wird.

13. Verfahren nach Anspruch 10, bei dem das hydroxyfunktionalisierte Polyetheramin in einer wässrigen Brönsted-Säure suspendiert wird.

14. Hydroxyfunktionalisiertes Polyetheraminsalz nach einem der Ansprüche 1 bis 9 in Form eines Films, Überzugs, Laminats, Klebstoffs, Schaums, geformten Gegenstands, extrudierten Gegenstands, biegsamen Behälters oder steifen Behälters oder Verpackungsmaterials.

15. Hydroxyfunktionalisiertes Polyetheraminsalz nach einem der Ansprüche 1 bis 9 in Form eines wasserabsorbierenden Gegenstands.

## Revendications

1. Sel de polyétheramine à fonction hydroxy représenté par les formules I, II ou III : 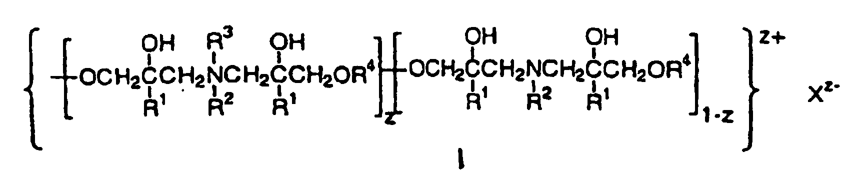 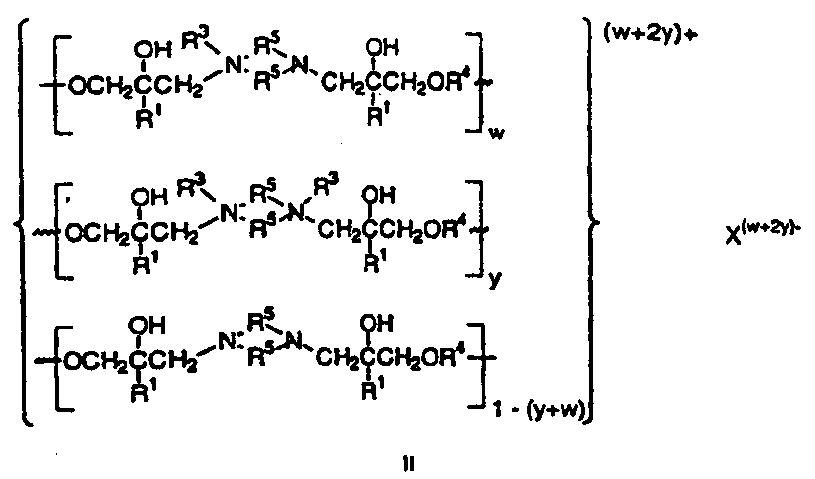 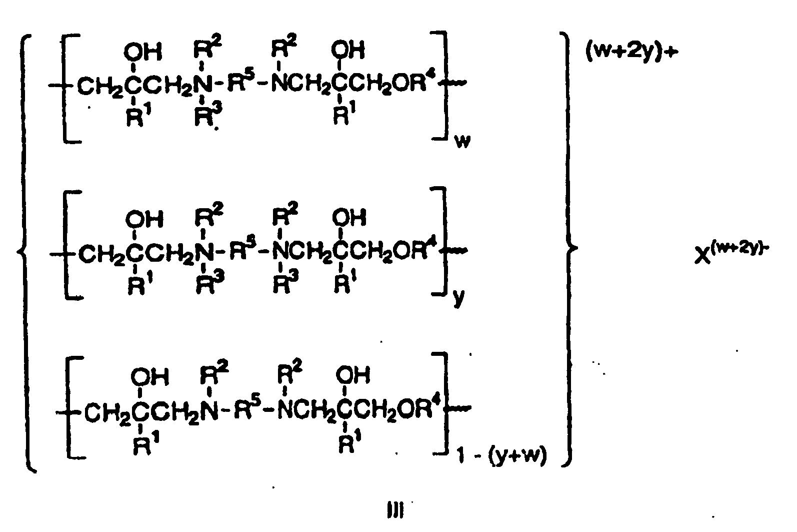
dans lequel R¹ représente un groupe hydrocarbyle ou un atome d'hydrogène ; R² représente un groupe hydrocarbyle ou hydrocarbyle substitué ; R³ représente un atome d'hydrogène ; R⁴ et R⁵ représentent indépendamment des groupes fonctionnels hydrocarbylène ; z représente un nombre de 0,01 à 1,0 ; w représente un nombre de 0 à 1,0 et y représente un nombre de 0 à 1,0 de telle manière que (w+y) soit égal à environ 0,01 à 1,0 ; n représente un nombre de 5 à 1000 et X représente un contre-ion chargé négativement ou une combinaison de tels ions présents en quantité suffisante pour équilibrer la charge positive totale des atomes d'azote tétracoordonnés.

2. Sel de polyétheramine à fonction hydroxy selon la revendication 1 dans lequel R¹ représente un groupe alkyle ou un atome d'hydrogène.

3. Sel de polyétheramine à fonction hydroxy selon la revendication 1 ou 2 dans lequel R² représente un groupe méthyle, éthyle, propyle, butyle, pentyle, hexyle, cyclohexyle, benzyle, phényle, 2-hydroxyéthyle, 2-hydroxypropyle, 3-hydroxypropyle, 2-acétamidoéthyle ou une combinaison de ces groupes fonctionnels.

4. Sel de polyétheramine à fonction hydroxy selon la revendication 1, 2 ou 3 dans lequel R⁴ représente un groupe éthylène, propylène, butylène, éthylèneoxyéthylène, propylèneoxypropylène, 1,3-phénylène, 1,4-phénylène, isopropylidènediphénylène, oxydiphénylène, thiodiophénylène, carbonyldiphénylène, méthylènediphénylène ou une combinaison de ces groupes fonctionnels.

5. Sel de polyétheramine à fonction hydroxy selon l'une quelconque des revendications précédentes dans lequel R⁵ représente un groupe éthylène ou le 1,2-propylène.

6. Sel de polyétheramine à fonction hydroxy selon l'une quelconque des revendications précédentes dans lequel X représente un groupe halogénure, nitrate, sulfate, phosphate ou phosphonate.

7. Sel de polyétheramine à fonction hydroxy selon l'une quelconque des revendications 1 à 5 dans lequel X représente un groupe carboxylate, carboxylate multi-fonctionnel, sulfonate ou sulfonate multi-fonctionnel.

8. Sel de polyétheramine à fonction hydroxy selon la revendication 7 dans lequel X représente un groupe acétate, benzoate, stéarate, 1,4-butanedicarboxylate, citrate, benzènesulfonate, ou p-toluènesulfonate.

9. Sel de polyétheramine à fonction hydroxy selon l'une quelconque des revendications précédentes formé en faisant réagir un acide protonique avec une polyétheramine à fonction hydroxy contenant soit une soit une combinaison des unités répétitives : 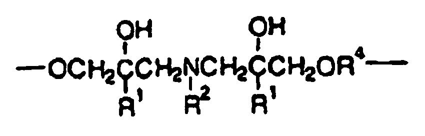 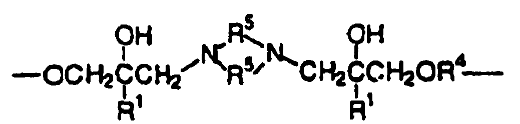 ou 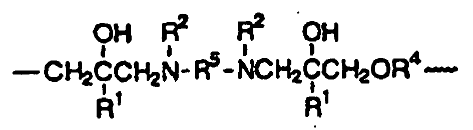
dans lequel R¹, R², R⁴ et R⁵ sont tels que définis précédemment.

10. Procédé qui comprend la mise en contact d'une polyétheramine à fonction hydroxy avec un acide protonique à une température de 25°C à 110°C pour former le sel de polyétheramine à fonction hydroxy selon l'une quelconque des revendications 1 à 9.

11. Procédé selon la revendication 10 dans lequel la polyétheramine à fonction hydroxy est fondue.

12. Procédé selon la revendication 10 dans lequel la polyétheramine à fonction hydroxy est dissoute dans un solvant.

13. Procédé selon la revendication 10 dans lequel la polyétheramine à fonction hydroxy est mise en suspension dans un acide protonique aqueux.

14. Sel de polyétheramine à fonction hydroxy selon l'une quelconque des revendications 1 à 9 sous la forme d'un film, d'un revêtement, d'un stratifié, d'un adhésif, d'une mousse, d'un article moulé, d'un article extrudé, d'un récipient flexible ou d'un récipient rigide, ou d'un matériau de conditionnement.

15. Sel de polyétheramine à fonction hydroxy selon l'une quelconque des revendications 1 à 9 sous la forme d'un article absorbant l'eau.
